# EUROPEAN PATENT APPLICATION

(11) **EP 1 530 327 A1**
(43) Date of publication of application: **11.05.2005**
(21) Application number: 04007723.2
(22) Date of filing: 30.03.2004
(51) Int. Cl.: H04L 12/56

(54) **A method and a network node for routing a call through a communication network**

(30) Priority: 06.11.2003 EP 03257020
(71) Applicant: SIEMENS AKTIENGESELLSCHAFT, 80333 München (DE)
(72) Inventor: Edwin, Richard, Southampton SO15 4HU (GB); Fan, Changpeng, Dr., 10557 Berlin (DE); Reeve, Andrew, Winchester, Hants SO22 5AH (GB)

(57) **Abstract**

The present invention comprises an enhanced method and a network node for faster updating of the link state database of nodes in a network, so that the database reflects the current network state. Thus allowing for faster route set-up calculations. This is implemented by using RSVP signalling messages to carry link state information concerning link failures back to routing nodes and information concerning the criticality of a link or links to a group of users. The RSVP protocol will pass on this specific information to the respective routing protocol, which in turn will update its link state database. Therefore building an up to date image of the network, which will allow the routing node to faster calculate a route a around the point of failure, when setting up a call.

## Description

### Field of the invention

The invention is used in the telecommunications field, in mobile or fixed networks that uses QoS routing.

### Detailed description of the invention

When calculating a route through a network from a source node to a destination node, one well-known algorithm is Dijkstra's shortest path algorithm. One variant of this algorithm has sometimes been referred to as the OSPF (Open Shortest Path) algorithm, since it is used in the internet routing protocol of the same name, which has been specified by RFC 2328 (J. Moy, "OSPF Version 2", RFC 2328, April 1998) and other related documents.
Today, the use of QoS routing in core networks (for both mobile and fixed networks) has become necessary in order to meet the needs of multimedia applications (i.e. videoconferencing, IP telephony) and to improve the efficiency of the network. For this type of routing, routing algorithms must be designed to meet QoS constraints. One such algorithm is the Constrained Shortest Path First (CSPF). This algorithm searches for the shortest path through the network which obeys certain constraints such as minimum bandwidth, maximum delay, etc. CSPF is based on Dijkstra's algorithm for the computation of the shortest path. CSPF can be used within a node running the OSPF routing protocol. Another such protocol that can be used in conjunction with normal routing protocols is the Resource Reservation Protocol (RSVP), (R. Braden et al., RFC 2205, September 1997). This is a network control protocol that enables internet applications to obtain different QoS for their data flows. An RSVP sender node, will send a message using the routes provided by the routing protocol, to a destination node, requesting a reservation of QoS parameters. Each node upon reception of such a request will send back to the sender node a reservation-request message. Upon reception of such a message the sender begins to send data.

Many studies have been performed into the benefits of QoS routing, but these concentrate on the benefits of QoS routing without taking into account the effect of mobility by an ever increasing population of users. Mobile subscribers cause varying load on network elements and routers. During some periods of the day, unacceptable call blocking ratios exist for non-QoS routing algorithms (e.g. OSPF). QoS routing algorithms are shown to cope with varying population distributions much more efficiently than non-QoS algorithms. However, OSPF as well as QoS routing algorithms are prone to cause unfairness to some populations that are attached to the network. This occurs when the routing algorithms route calls using a node which is critical to the isolated population for keeping it connected to the rest of the network.
Furthermore, when the routing algorithms perform the route calculations,for setting up the route of a call, these calculations will be made based on the current state of the link state database (LSDB). If now there is an error condition in the network, normal link state propagation methods (e.g. OSPF LSA (Link State Advertisements)) will be used to propagate that information to each routing node, in order for the LSDB to be updated and reflect the current network state. However, a long time can be necessary in order for all the routing nodes to receive all the different LSA and so have an accurate picture. This is a further drawback, especially for networks that use QoS and non-QoS routing algorithms, as the ingress node (the source node that wants to send data with QoS requirements) must still wait for the LSA to arrive and have the LSDB updated.

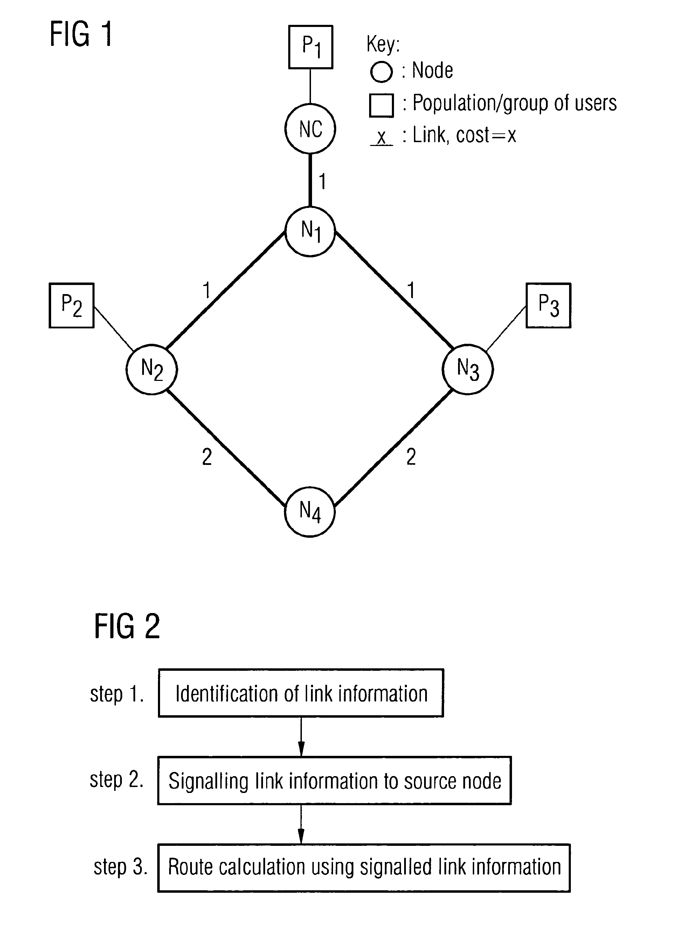

As illustrated in fig. 1, node N1 is a critical node to population P1, as it is the only node that can be used to route calls to populations P2 and P3. Therefore the links between node N1 and nodes N2 and N3 are critical links to population P1, as it is only through these links that population P1 can access the network. This can occur due to two reasons, firstly the cost of these links may be lower than the costs of other links, secondly, in the case of equal cost paths the order in which they are added to the LSDB may cause these links to be used in preference to other links that are not directly used by population P1 to access the network. In a large network these situations can be very difficult to avoid, especially when using multi-vendor equipment.

In either of these cases outlined above the routing algorithms route calls between P2 and P3 via node N1, and therefore use up bandwidth on links N1-N2 and N1-N3. This starves population P1 of network resources. It must be noted that there is an alternative link between N2 and N3 via node N4, which could be used, but was not used due to its higher cost or due to the order in which it was added to the LSDB. In this way population P1 is unnecessarily starved of network resources. This type of inefficient routing is a problem that has not been seen before.

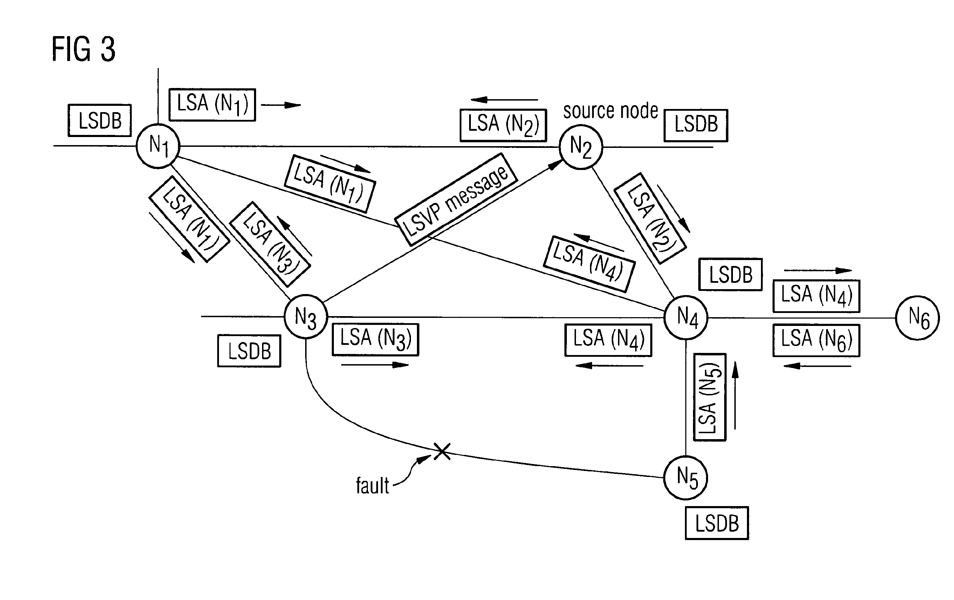

As illustrated in fig. 3, routers in a network that use routing protocols such as OSPF, exchange link state information which is maintained by each router in its LSDB that describes the network's topology. Whenever a change occurs in the network (e.g. a link is down, its cost has changed, etc.), the protocol triggers the routers to send updates containing the changes that have occurred in their immediate surroundings throughout the network. These updates are called Link State Advertisements (LSAs), and contain actual network topology information. With the information provided by the LSAs, routers can calculate the shortest paths from themselves to other parts of the network. However, a long time can be necessary in order for all the routing nodes to receive all the different LSA and so have an accurate LSDB. This is especially detrimental when QoS requirements are necessary.

A need therefore exists to accelerate the procedure by which a node performing the route calculation receives all the necessary network information to set up the call (i.e. the state of the network or the criticality of a link) and thus avoid a point of failure and make more efficient use of the actual network resources. Said issues are solved by the features mentioned in the independent method claim and apparatus claims. Preferred embodiments of the invention are described in the dependent claims.

The present invention aims to solve the above issues by means of a method for routing a call through a communications network. Said method comprises the steps of:
- identifying in a network node link information that is important to a source node within the communications network to calculate a route;
- signalling the said link information to said source node using messages;
- calculating in the source node the route path using said link information.

In addition to the suggested method, a network node for identifying important parameters and communicating them to a source node is suggested. Said network node comprises:
- identifying means adapted to identify link information that is important for calculating, by a source node, a route for a call through a communications network;
- communications means adapted to signal said link information to said source node using messages;

In addition to the suggested network node, a network source node for calculating a route for a call through a communications network is suggested. Said source node comprises:
- communication means adapted to receive messages from other nodes in the network;
- identifying means adapted to identify link information in the received messages;
- route calculating means adapted to use said link information in said route calculation.

Thus the drawbacks caused by the prior art are resolved, and the overall efficiency of the network is improved as the necessary information needed by a node in order to calculate a route is received faster than in the prior art methods and a more efficient calculation is performed. In this way points of failure are avoided and network resources are more efficiently used.

The above is achieved by extending the use of a RSVP Notify message or of a RSVP-TE Notify message to contain information that is sent in normally in a LSA. The RSVP Notify message is sent between nodes that run the RSVP protocol. The RSVP control software on each node is configured in such a way that when such a message is received, it can recognise an identifier on the message that indicates that there is link information contained in it, and can then pass the information to the routing protocol (i.e. OSPF), which decodes the information and updates the LSDB. The link information that is provided in the messages comprises of a number of important parameters that reflect the criticality of a link or links or the actual state of a link or links. The parameters that reflect the criticality of a link or links, are parameters that reflect the importance of a link or links to a particular group of users for accessing the network. Such links need to be available at all times to the groups of users that through them access the network and are defined as critical links. The parameters that reflect the actual state of a link or links, are parameters that reflect traffic information, e.g., the link is full, the quality of service of the link the quality of service is not supported, the link has failed information, the amount of bandwidth currently available, the amount of bandwidth that can be reserved etc.
In this way the LSDB is updated a lot faster compared to waiting for all the LSAs to propagate through the network, thus allowing for a route calculation to make use of this information earlier than before and so be able to route calls around critical network points.

Preferred embodiments of the present invention will now be described with reference to the accompanying drawings.

### Short description of the drawings

Fig. 1, shows one instance where the proposed solution is applicable.
Fig. 2, shows the flowchart of the proposed solution.
Fig. 3, shows another instance where the proposed solution is applicable.

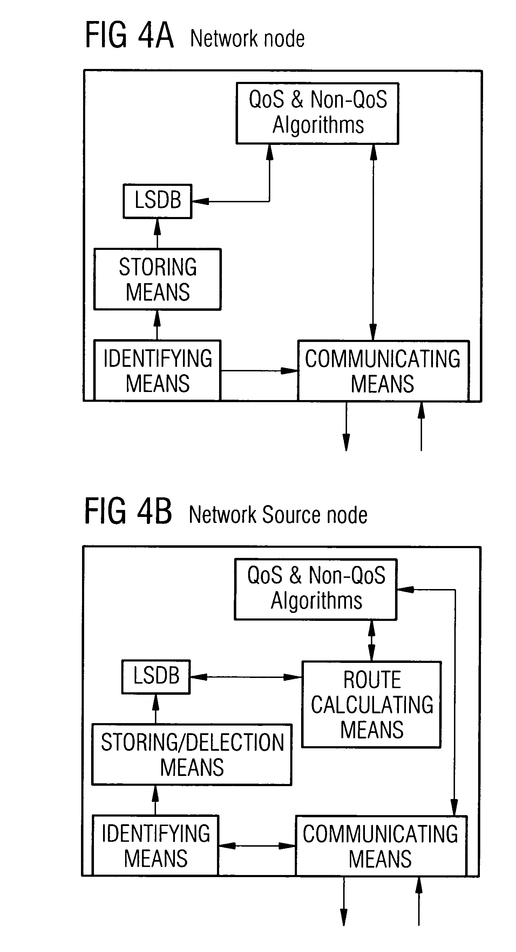

Fig. 4a and 4b, show the two different types of node.

The flowchart in fig. 2 shows the proposed method. It comprises of three functional blocks. Firstly, link information such as critical links in the network and or actual state traffic parameters need to be identified. Secondly this information needs to be signalled through the network to the source node that is performing the route calculation and to other nodes in the network so that they can update their LSDBs and thirdly to use this information in their route calculations. By updating the routing process in this way and using the information provided, the QoS routing algorithms can improve the overall QoS experienced by network users, especially those that would otherwise experience unfairness.

By updating the route calculation performed by source nodes such that the node can identify a link which is critical to a call then any critical links can be signalled to the nodes attached to the link, by using an RSVP or RSVP-TE notify message. Upon reception of such a message indicating how critical a link is, the LSDB is updated. Once the LSDB has been updated, it will then propagate this change through the network using normal protocols (i.e. OSPF Opaque LSA). In this way each source node will have knowledge of how critical a link is to other nodes in the network. The source node can then attempt to avoid using these critical links when setting up a call. This can be done by including the parameter reflecting the importance of a link or links to a particular group of users, as part of the route calculation using an additional constraint or a weighting method. If no alternative route is available then the critical link will have to be used. This is handled inherently by an inflated weight for a critical link. The weighting is scaled according to how many nodes the link is critical to.

During a route calculation the fact that a link can be a critical link, must be taken into account. Using for example the CSPF algorithm, the cost of candidate links is adjusted according to the number of nodes that this link is critical to. The more nodes that depend on the link, and therefore the more groups of users that depend on the link, the higher the cost of the link. This method is called inflated weight method. Links which are critical to the source node are not adjusted so that they can be used by the route calculation algorithm.

In this embodiment of the invention once the RSVP message has been received and the LSDB updated, a two-pass route calculation technique. The first pass tries to calculate a route avoiding all critical links not critical to the source node. If that fails the second pass uses the inflated weights mechanism, to see if there is a possible route. The advantage over other techniques is that by use of the RSVP message carrying the information regarding the critical link or links, the routing nodes will receive the information faster and so be able to avoid such a link or links. If that is not possible then the least critical links will be used first in the calculation based on the inflated weight method.

Fig.3 shows another instance where the proposed invention can be applied. When a route is being calculated from a source (ingress) node (N2), the LSDB will be used in order to set up the path of the call. However there is a possibility that the calculated route is not available at the time of signalling due to the actual state of the network. This could be due to the fact that a link along the path has failed, or there is not enough available bandwidth, or the service is not supported etc. However due to the long time LSAs take to propagate through the network, the information has not been received by the source (ingress) node. Therefore when the node tries to set up the call again, it can not guarantee that there will be a better outcome, as it will still use the out-of-date information stored in the LSDB. In order to avoid this, the node that is responsible for the failed link (N3) sends an RSVP Notify or RSVP-TE Notify message back to the source (ingress) node (N2) that originated the call. The message contains traffic information parameters regarding the failed link, e.g. the link is full, the quality of service (QoS) is not supported, the link has failed information, the amount of bandwidth currently available, the amount of bandwidth that can be reserved etc. Once such information is received, it is then added to the LSDB of the source (ingress) node (N2) as part of an extended link information list. This extended link information list is transient and is used to contain the specific traffic information. Then when the route calculation is performed, the information added will allow the routing algorithm such as CSPF to avoid these failed links. Once the call has been set up this extended link information is removed, allowing the node to be ready to begin a new call set up. Alternatively, the node keeps this information, as it represents a more recent and accurate view of the network for use in subsequent calculations, and is updated whenever new traffic parameters are received.
The advantage over other techniques is that by use of the RSVP message carrying the information regarding the critical link, the source (ingress) node will receive the information faster and so be able to avoid a point of failure when recalculating the route path. Thus increasing the guarantee of a better call set up outcome.

## Claims

1. A method for routing a call through a communications network, comprising the steps of:
- identifying in a network node link information that is important to a source node within the communications network to calculate a route (step 1);
- communicating the said link information to said source node using messages (step 2);
- calculating in the source node the route path using said link information (step 3).

2. A method according to claim 1, further comprising the step of further communicating at least parts of said link information to other network nodes throughout the network.

3. A method according to claim 1, whereby non-Quality of Service and/or Quality of Service routing algorithms are located on all nodes in the network and are used to communicate link information.

4. A method according to claim 1, whereby communicating is implemented by use of notification messages.

5. A method according to claim 4, whereby the notification messages are Resource Reservation Protocol Notify messages.

6. A method according to claim 4, whereby the notification messages are Resource Reservation Protocol - Traffic Engineering Notify messages.

7. A method according to claim 2, whereby the communicating to other nodes in the network is implemented by Link State Advertisement messages.

8. A method according to any of the previous claims, whereby the at least part of the link information comprises of one or more parameters reflecting the criticality of a link or links and/or the actual state of a link or links.

9. A method according to claim 8, whereby the parameters reflecting the actual state of a link are traffic parameters.

10. A method according to claim 8, whereby the parameters reflecting the criticality of a link, indicate whether an identified link or links is critical to a group of users.

11. A method according to claim 8, whereby said link information once received by the source node is stored into a Link State Database.

12. A method according to claim 8, whereby at least part of the link information is stored in other network nodes.

13. A method according to claims 8 or 10, whereby for route path calculation the cost of the identified critical link is inflated according to the number of network nodes that depend on the link.

14. A method according to claim 13, wherein the route path calculation in a first step avoids including said critical link with said inflated route cost in its calculation and if the route calculation fails, in a second step calculates the route by including said critical link with said inflated route cost in its calculation.

15. A method according to claim 9, wherein the route path calculation includes said parameters in its calculation and once said calculation is executed, said parameters are deleted from said Link State Database.

16. A network node comprising:
- identifying means adapted to identify link information that is important for calculating, by a source node, a route path for a call through a communications network; and
- communications means adapted to signal said link information to said source node using messages.

17. A network node according to claim 16, wherein said communication means are adapted to communicate at least parts of said link information to other nodes throughout the network.

18. A network node according to claim 16, wherein said communications means are adapted to use non-Quality of Service and Quality of Service routing algorithms.

19. A network node according to claim 16, wherein said communications means are adapted to signal notification messages.

20. A network node according to claim 16, wherein said identifying means are adapted to identify a number of parameters that reflect the criticality of a link or links and/or the actual state of a link or links.

21. A network node according to claim 20, wherein said network node comprises storing means adapted to store said link information into a Link State Database (LSDB).

22. A network node according to claim 20, wherein said identifying means identify the importance of a link to a group of users as the parameter reflecting the criticality of a link or links.

23. A network node according to claim 20, wherein said identifying means identify traffic parameters to reflect the actual state of a link or links.

24. A network source node for calculating a route path for a call through a communications network, comprising:
- communication means adapted to receive messages from other nodes in the network;
- identifying means adapted to identify link information in the received messages;
- route calculating means adapted to use said link information in said route path calculation.

25. A network source node according to claim 24,comprising storing means adapted to store said received link information in a Link State Database.

26. A network source node according to claim 24, wherein said route calculation means are adapted to inflate the cost of said identified critical link or links included in the received link information according to the number of nodes that depend on the link or links.

27. A network source node according to claim 26, wherein said route calculation means are adapted to not include said critical link or links in the route calculation and if the route calculation fails, said route calculation means are adapted to include said inflated route cost in the route calculation.

28. A network source node according to claim 24, wherein said route calculating means are adapted to include said traffic parameters included in the received link information in the route calculation, calculating means adapted to calculate the route path and deletion means adapted to delete said parameters once the calculation has been executed.

29. A network comprising at least one network node and at least one source node, wherein to perform a route path calculation for a call in a communications network said network node comprises:
- identifying means adapted to identify link information that is important for calculating, by a source node, a route for a call through a communications network;
- communications means adapted to signal said link information to said source node using messages;
and said source node comprises:
- communication means adapted to receive messages from said network node;
- identifying means adapted to identify link information in the received messages;
- route calculating means adapted to use said link information in said route calculation.
